Europäisches Patentamt

**European Patent Office**

**Office européen des brevets**

(11) Publication number: **0 129 704**
**A1**

(12) # EUROPEAN PATENT APPLICATION

(21) Application number: **84105721.9**

(22) Date of filing: **18.05.84**

(51) Int. Cl.⁴: **C 07 C 7/11**
**C 07 C 9/04, C 01 B 31/20**
**B 01 D 53/14**

(30) Priority: **25.05.83 US 497782**

(43) Date of publication of application:
**02.01.85 Bulletin 85/1**

(84) Designated Contracting States:
**BE DE FR GB NL SE**

(71) Applicant: **NORTON COMPANY**
**1 New Bond Street**
**Worcester Massachusetts 01606(US)**

(72) Inventor: **Zudkevitch, David**
**24 Magnolia Ave.**
**Denville New Jersey(US)**

(72) Inventor: **Sweny, John William**
**698 Beechcrest Drive**
**River Vale New Jersey(US)**

(72) Inventor: **Czerwienski, Gregory John**
**26 West 36th Street**
**Bayonne New Jersey(US)**

(74) Representative: **Baillie, Iain Cameron et al,**
**c/o Ladas & Parry Isartorplatz 5**
**D-8000 München 2(DE)**

(54) **Separation of methane rich-gas, carbon dioxide and hydrogen sulfide from mixtures with light hydrocarbons.**

(57) A process for separating a gas-stream rich with both carbon dioxide and compounds heavier than ethane such as the gas from enhanced oil recovery and recovering separate streams of cabon dioxide "sales-gas" consisting of nitrogen, methane and ethane, and a liquid natural-gas-condensate. This process comprises the steps of an extractive distillation which utilizes a hydrocarbon mixture such as naphtha as the solvent and an absorption/desorption step using as the solvent a mixture of dialkyl ethers of polyalkylene glycols.

EP 0 129 704 A1

This invention relates to a process for separating mixtures containing light hydrocarbons, carbon dioxide, hydrogen sulfide, mercaptans and carbonyl sulfide. More particularly, this invention relates to an integrated process for recovering a separate stream of fuel-grade natural gas which is mainly methane with some quantities of nitrogen, ethane and smaller quantities of carbon dioxide, a separate stream of propane and heavier hydrocarbons, and a separate stream of carbon dioxide. Still more particularly, such a gas having a heating value between 500 and 1300 Btu per standard cubic foot, known as "sales-gas", is separated from its original mixture with carbon dioxide and other compounds such as ethane, hydrogen sulfide, propane and heavier hydrocarbons. The heavier hydrocarbons are sometimes referred to as "LPG" or "NGL" while the original gas may be referred to in commerce as an "associated gas" or "separator" gas.

The said sales-gas stream of this process is virtually free of hydrogen sulfide.

The process of this invention also encompasses within its scope the recovery as a separate stream most of the carbon dioxide that is present in the original mixture. By practicing this process, a stream of carbon dioxide is obtained which is substantially free of hydrogen sulfide. In most instances by controlling the process variable carbon dioxide streams of sufficient purity and properties subitable for reinjection into petroleum oil reservoirs are recovered.

Briefly state, the process of this invention

DKT H-1889

encompasses two main steps. In the first step, Step I, the original associated gas, after drying to water dew point of -60°F., is subjected to absorption/stripping under a moderate pressure between 200 psia and 800 psia and within the temperature range of about -20°F. to about +40°F. at the top of the absorber/stripper. One such absorber/stripper is described here as the "DECOTIZER". The solvent for the absorption/stripping in the first column can be any hydrocarbon or a mixture of hydrocarbons which has a boiling range between about 120°F. and about 400°F. and which as a freezing point lower than about -20°F. Such a solvent may comprise a paraffin such as any hexane, heptane, octane, dodecane, etc., or mixtures thereof or preferably, a mixture such as but not limited to heavy naphtha or any gasoline, kerosine, or jet fuel. These compounds and mixtures are readily available from a gas processing plant. Olefines may also be suitable. These include for example, any heptene, or naphthas resulting from a cracking or a pyrolysis process.

In the second step, Step II, the overhead gas from the absorber/stripper of Step I is separated into a carbon dioxide-rich stream and a methane-rich stream. The preferred separation of Step II is to absorb the carbon dioxide from the overhead stream from the first column of Step I in a solvent as described below. The methane-rich sales gas is thus rendered practically free of carbon dioxide and can be made to meet any required specifications. In a further step of Step II, the carbon dioxide, with possible traces of ethane, if the latter is present in the original stream, is recovered from the solvent.

The conditions for operating the present process can be readily varied to control the distribution of ethane among the three streams, i.e. the composition of the sales-gas, the purity of the carbon dioxide and the composition of the decotizer's bottom stream; the latter containing most of the ethane from the original associated gas and virtually all of the propane and heavier hydrocarbons. An added feature of the process is that it also provides for the control of the distribution of the hydrogen sulfide.

The solvent for absorbing the carbon dioxide in Step II can be any of the physical solvent. The term "physical solvent" as used herein refers to a solvent which absorbs the carbon dioxide without depending on a chemical reaction with said gas. Preferably such a solvent requires little energy for regeneration from Step II while recovering the carbon dioxide. Hence, the most preferred solvent is a polymer containing repeating units of $(R_1-O)_n-R_2$ groups, where $R_1$ is a portion of $(-CH_2)n'$ chain and $R_2$ is a chain-ended with a $-CH_2OH$ terminal group and $R_1$ and $R_2$ represent alkyl of 1 to 6 carbon atoms.

Examples of the physical solvents useful in the practice of this invention include dialkyl ether of polyalkylene glycols and the solvents described in U.S. Patent 3,737,392 are particularly suitable. The preferred solvent is a mixture of polymers of the glycol family described above having an average molecular weight between 200 and 1000 and the atmospheric bubble point varying between about 300°F. and about 600°F. An example of such a solvent is a mixture of dimethyl ethers of polyethylene glycols having the general formula $CH_3O(C_2H_4O)_xCH_3$ wherein x is 3-9 and the molecular homolog distribution in terms of x is:

| x: | Molecular homolog, wt. percent |
|---|---|
| 3 | 4-9 |
| 4 | 22-24 |
| 5 | 24-28 |
| 6 | 20-22 |
| 7 | 13-15 |
| 8 | 6-8 |
| 9 | 2-4 |

and available from Norton Company, Worcester, MA 01606 under the trademark SELEXOL.

The instant process is advantageous over other known processes such as those described by A. S. Holmes et al, "Pilot Tests Prove Ryan/Holmes Cryogenic Acid Gas Process", Gas Processors Association, Dallas, Texas (March 15-17, 1982), Page 5; A. S. Holmes et al U.S. Patent 4,293,322 (October 6, 1981), and A. S. Holmes et al U.S. Patent 4,318,723 (March 9, 1982) by virtue of the high temperature in the absorber/stripper of Step I. It utilizes a different processing scheme and different solvents, requires less severe refrigeration, and offers flexibility in controlling the heating value of the ...les -gas and the concentration of nitrogen and methane in the recovered carbon dioxide.

DETAILED DESCRIPTION OF THE INVENTION

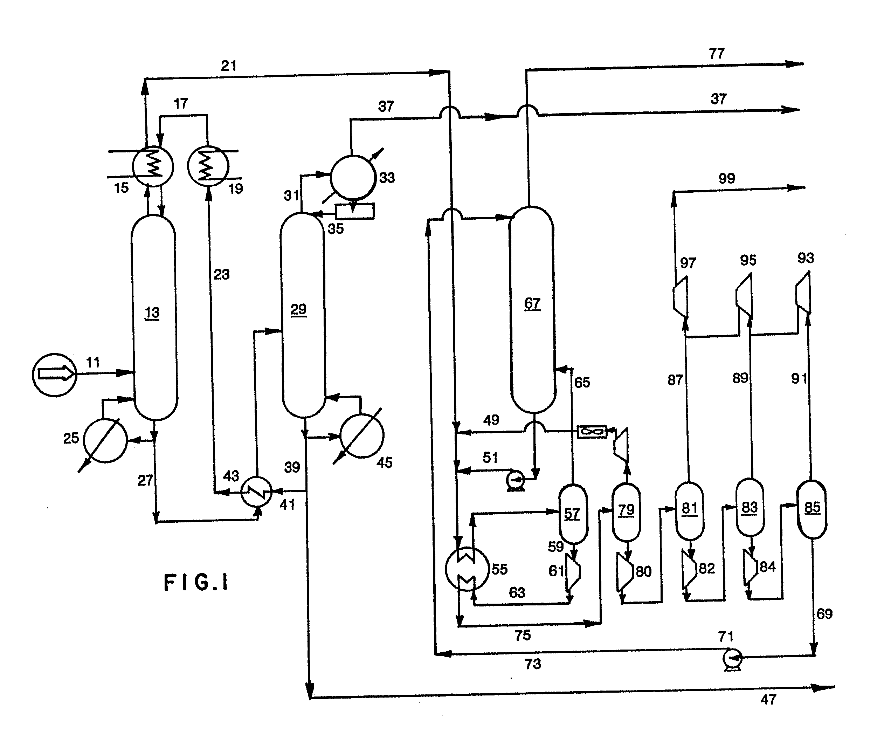

Referring now to the drawings, Figure 1 diagrammatically illustrates the process of this invention.

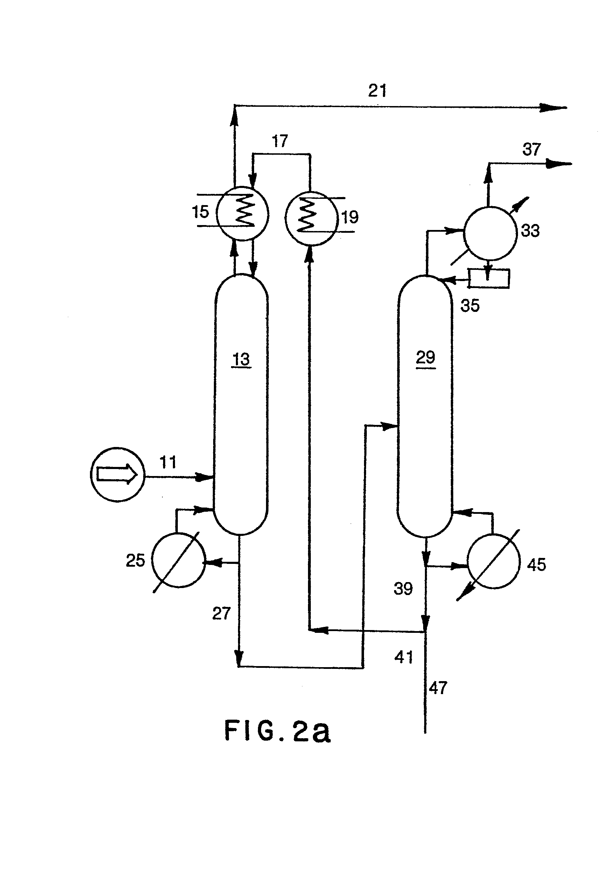

Figure 2a diagrammatically illustrates the separation of carbon dioxide and sales gas, and ethane and LPG from natural gas liquids.

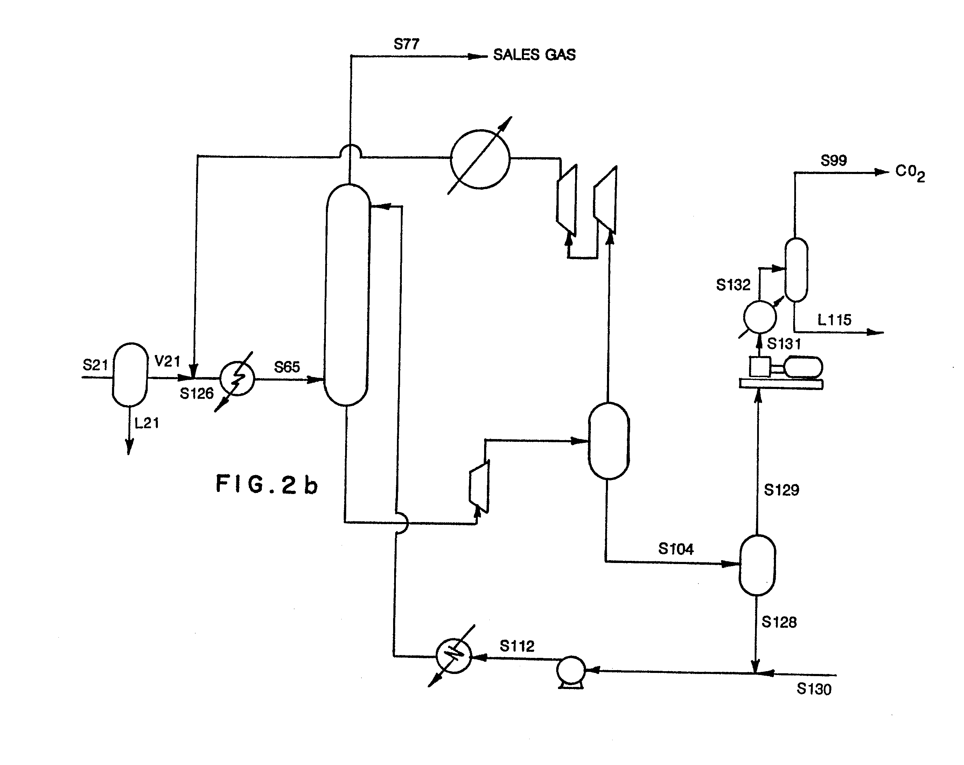

Figure 2b diagrammatically illustrates the separation recovery of carbon dioxide and sales-gas.

As described hereinabove, the process of this invention comprises two steps. In Step I, the dehydrated (dewatered) associated gas under a moderate pressure and at a temperature between about 0°F. and about 100°F., as stream 11, enters the absorber/stripper "DECOTIZER" column 13 at a point in the bottom part of said column, which is equipped with an overhead condenser 15 and a reboiler 25 and internals such as trays, or packing or any device which can be or is utilized commercially for the purpose of contacting and separating vapors and liquids in absorption or distillation. A variety of these packings are available under the brand INTALOX from Norton Company, Worcester, MA. The number of trays or equivalents thereof may vary from case to case but the preferred number may be between 5 and 100 with the more preferred number being about 30.

The cooling medium for condenser 15 is selected to maintain a temperature level between about -20°F. and about +40°F. Such a level can be maintained by many commercially available refrigerants such as, but not limited to propane, butane, ammonia and fluorocarbons, etc. A solvent stream 17 is fed either into the condenser 15 or onto a tray in the top section of said column, or through the liquid distributor at the top section of a packed column. The associated gas is then subjected to absorption/stripping whereby the light components, methane, nitrogen, carbon dioxide and some ethane are separated as the overhead stream 21 while a large portion of the ethane as well as virtually all the propane and heavier hydrocarbons as well as hydrogen sulfide are collected at the bottom as stream 27. The absorption/stripping can be done with or without reflux and with or without reboiling. Reboiling, if it is required, is provided by the reboiler 25.

The compositions of streams 21 and 27 leaving column 13 are controlled by varying the solvent-to-feed rates, the temperatures of streams 17 and 21, and the pressure level in column 13. For example, the bottom stream 27 from column 13 of Step I is fed into a distillation column 29 for recovering ethane, hydrogen sulfide, propane and butane in the form of overhead stream 37. The composition of stream 37 is controlled by the temperature and rate of the reflux stream 35 from the condenser 33. Reboiling is provided by a reboiler 45. Either the entire bottom stream 39 or a portion thereof 41 is cooled by exchanging heat with stream 27 in a heat exchanger 43. The solvent stream, stream 41, is thus cooled. Stream 23, can be separated from the pentanes and some of the heavier hydrocarbons of the original associated gas in another distillation column (not shown in Figure 1), and is reused as the solvent, stream 17.

The overhead gas stream 21, from the first column of Step I, column 13, which contains practically all the nitrogen, methane, carbon dioxide, and some of the ethane of the original "associated-gas", is separated in Step II, into sales-gas, stream 77, which is virtually methane, with some nitrogen, ethane and an allowable trace of carbon dioxide. In this step, a separate carbon dioxide-rich stream with some ethane and traces of methane, stream 99, is also recovered. The solvent absorption/stripping set-up of Step II can be one of any existing or commercially available processes. In the diagram shown as Figure 1, a standard "SELEXOL" process, D. K. Judd, "SELEXOL Unit Saves Energy", Hydrocarbon Processing, April 1978, (Pages 122-124) for absorption/ recovery of carbon dioxide, is utilized. Thus, the "lean solvent", as stream 73, is introduced onto a tray or through a distributor in the top section of the absorber 67 where it contacts the gas 65, which is rich with carbon dioxide, the latter being the product of flashing a carbon dioxide-rich, stream 53, into a separator drum 57. The absorber/exchanger 55 together with the separator drum 57 provides for recovering a gas stream rich with carbon dioxide from bottoms 51 of the absorber 67 and the overhead stream 21 from column 13 of Step I as well as recycled carbon dioxide recompressed to an intermediate pressure, stream 49. Stream 59, from separator drum 57 containing the solvent and is rich in carbon dioxide is subjected to a series of expansions in expanders as shown in Figure 1 by units 61, 80, 82 and 84 each of which is followed by its respective separation drum 79, 81, 83, and 85. Resulting from these consecutive expensions, carbon dioxide is released as vapor streams 49, 87, 89, and 91 each at different pressure. While stream 49 is recycled, the original quantity of the carbon dioxide in stream 21 is now divided into several streams and can be compressed, if so desired, in compression stages 93, 95, and 97 and recombined to constitute stream 99, the regenerated carbon dioxide under pressure.

Stream 37, which may contain hydrogen sulfide, carbonyl sulfide, and either methyl or ethyl mercaptan, or some of both can be further treated by any conventional method to remove these contaminants. In order to illustrate the practice of this invention the following Example is included.

EXAMPLE I

In a process as shown schematically on Figures 2a and 2b, a feed gas stream, described in Table I as stream S11, is fed onto the fifth tray, counting from the reboiler, of column 13 comprising a reboiler 23, trays and a condenser. Stream S17 which is called the "recycled solvent" is fed into the condenser 15 of column 13 continuously and simultaneously with the feeding of stream S11. The column operates under an overhead pressure of 500 psia. The products from this absorption/stripping operation are a vapor stream S21 which contains virtually all the carbon dioxide, nitrogen, and methane of the original feed stream S11 and some of the ethane, and a liquid stream S27 which contains virtually all the propane and heavier hydrocarbons, and most of the ethane. The reflux ratio is 4:1 in this run.

In a further step, bottom stream S27 from column 13 is fed onto tray 8, counted from the reboiler, of distillation column 29, which comprises a reboiler 25, twelve distillation trays and a condenser 33, where it is distilled to produce a vapor stream S37 which contains virtually all the ethane, propane and butanes. The bottom liquid stream S39 from column 29 comprises pentanes and heavier hydrocarbons with traces of carbon dioxide and butanes. Part of stream S39, and stream S41 are recycled and reused as the solvent S17 after cooling in exchanger 19 and in condenser 15 where it is returned into column 13 in combination with the reflux. The other part of stream S39 is a natural-gas condensate product.

The compositions of the streams resulting from such as operation under reflux at the ratio of 4:1 are also given in Table 1.

Stream S21, the vapor product from column 13 is subjected to absorption/desorption and recovery of carbon dioxide and sales-gas with "SELEXOL" being used as solvent as shown in Figure 2b. The results from Step II, of the process, shown in Table 2, indicates that a stream S99 which is virtually pure carbon dioxide, 98.54 mole %, and a sales-gas stream, S77, with only 0.37 mole % carbon dioxide is recovered from an original stream S11 which is rich with carbon dioxide by practice of this invention.

TABLE 1

MATERIAL BALANCE AND COMPOSITIONS OF STREAM EXTRACTIVE DISTILLATION
SECTION FIGURE 2A OF EXAMPLE 1

| STREAM ID | | S11 | S17 | S21 | S27 | S37 | S47 |
|---|---|---|---|---|---|---|---|
| H2S | LBMOL/HR | 0.0 | 0.0 | 0.0 | 0.0 | 0.0 | 0.0 |
| N2 | LBMOL/HR | 2.5327 | 0.0 | 2.5327 | .51584-11 | 0.0 | 0.0 |
| CO2 | LBMOL/HR | 872.3871 | 1.9643 | 869.9862 | 4.3653 | 2.1826 | 0.2182 |
| CH4 | LBMOL/HR | 253.2736 | 0.0 | 253.2736 | .11285-05 | .11285-05 | 0.0 |
| C2H6 | LBMOL/HR | 81.1882 | 0.0 | 19.1394 | 62.0488 | 62.0488 | 0.0 |
| C3H8 | LBMOL/HR | 94.5555 | 0.0 | .84306-13 | 94.5555 | 94.5555 | 0.0 |
| C4H10-2 | LBMOL/HR | 14.2114 | 0.2604 | 0.0023 | 14.4695 | 14.1801 | 0.0289 |
| C4H10-1 | LBMOL/HR | 39.6795 | 0.7272 | 0.0041 | 40.4026 | 39.5945 | 0.0808 |
| C5H12-2 | LBMOL/HR | 9.1459 | 0.4309 | .77807-03 | 9.5761 | 9.0973 | 0.0478 |
| C5H12-1 | LBMOL/HR | 7.8796 | 0.3712 | .46561-03 | 8.2504 | 7.8379 | 0.0412 |
| C6H14-4 | LBMOL/HR | 9.1459 | 81.7738 | 0.0601 | 90.8597 | 0.0 | 9.0859 |
| C7H16-1 | LBMOL/HR | 0.0 | 0.0 | 0.0 | 0.0 | 0.0 | 0.0 |
| TOTAL | LBMOL/HR | 1384.0000 | 85.5280 | 1145.0000 | 324.5281 | 229.4969 | 9.5031 |
| TEMP | F | 127.6211 | 20.0000 | 18.7784 | 170.0889 | 202.0000 | 250.0000 |
| PRES | PSI | 500.0000 | 500.0000 | 500.0000 | 500.0000 | 500.0000 | 500.0000 |
| VFRAC | | 1.0000 | 0.0 | 1.0000 | 0.0 | 1.0000 | 0.0 |
| LFRAC | | 0.0 | 1.0000 | 0.0 | 1.0000 | 0.0 | 1.0000 |
| DENSITY | LBMOL/CUFT | 0.0793 | 0.4977 | 0.0973 | 0.5415 | 0.0704 | 0.3963 |
| AVG MW | | 39.2253 | 84.7539 | 37.5576 | 57.1082 | 45.6606 | 84.7539 |

## TABLE 2

MATERIAL BALANCE AND COMPOSITIONS OF STREAMS
$CO'_2$ AND SALES GAS RECOVERY VIA SELEXOL ABSORPTION/DESORPTION OF EXAMPLE 1

| STREAM | | V21 | S77 | S99 | L115 |
|---|---|---|---|---|---|
| H2S | LBMOL/HR | 0.0 | 0.0 | 0.0 | 0.0 |
| N2 | LBMOL/HR | 2.5327 | 2.5323 | .35750-03 | 0.0 |
| CO2 | LBMOL/HR | 869.9938 | 0.9803 | 869.0576 | 0.0 |
| CH4 | LBMOL/HR | 253.2736 | 252.7512 | 0.5206 | 0.0 |
| C2H6 | LBMOL/HR | 18.9188 | 6.9218 | 11.9932 | 0.0 |
| C3H8 | LBMOL/HR | .10125-12 | .36511-12 | .10125-12 | 0.0 |
| C4H10-2 | LBMOL/HR | 0.0024 | .28113-13 | 0.0023 | 0.0 |
| C4H10-1 | LBMOL/HR | 0.0044 | .18209-13 | 0.0044 | 0.0 |
| C5H12-2 | LBMOL/HR | 0.1547 | .59552-14 | 0.1547 | 0.0 |
| C5H12-1 | LBMOL/HR | 0.0933 | .41895-14 | 0.0933 | 0.0 |
| C6H14-4 | LBMOL/HR | 0.0259 | .10183-14 | 0.0259 | 0.0 |
| C7H16-1 | LBMOL/HR | 0.0 | 0.0 | 0.0 | 0.0 |
| H2O | LBMOL/HR | 0.0 | 0.0 | 0.0 | 0.0 |
| H2 | LBMOL/HR | 0.0 | 0.0 | 0.0 | 0.0 |
| O2 | LBMOL/HR | 0.0 | 0.0 | 0.0 | 0.0 |
| CO | LBMOL/HR | 0.0 | 0.0 | 0.0 | 0.0 |
| SELEXOL | LBMOL/HR | 0.0 | .14318-06 | 0.0 | 0.0 |
| TOTAL | LBMOL/HR | 1144.9996 | 263.1858 | 881.8526 | 0.0 |
| TEMP | F | 25.0000 | 26.3477 | 264.4070 | 84.2222 |
| PRES | PSI | 500.0000 | 500.0000 | 2000.0000 | |
| VFRAC | | 1.0000 | 1.0000 | 1.0000 | |
| LFRAC | | 0.0 | 0.0 | 0.0 | |
| DENSITY | LBMOL/CUFT | 0.1258 | 0.0195 | 0.3498 | |
| AVG MW | | 37.5651 | 16.6312 | 43.8131 | |

C L A I M S

1.      An integrated process for separating a carbon dioxide-
rich associated gas comprised mainly of methane, nitrogen,
ethane, carbon dioxide, hydrogen sulfide and a small quantity
of light hydrocarbons, which comprises the steps of

(a). passing the associated gas through an absorption
zone maintained at a temperature of about -20°F. to 40°F.
containing as a solvent a hydrocarbon or a mixture of
hydrocarbons having a boiling point between about 120°F. and
about 400°F. and a freezing point lower than -20°F., thereby
yielding a mixture of hydrocarbons, hydrogen sulfide and
mercaptans in the solvent and in overhead gas;

(b)  passing the overhead gas from the absorption zone
of step (a) through a physical solvent which absorbs substantially all the carbon dioxide, thereby yielding a sales
gas stream and a solvent containing the carbon dioxide and

(c)  recovering the carbon dioxide from step (b) by
flashing and/or stripping.

2.      A process according to claim 1, wherein step (a)
is effected at a temperature higher than -20°F.

3.      A process according to claim 1 or 2, wherein the
hydrocarbon solvent of step (a) is a hydrocarbon having at
least 6 carbon atoms, a heavy naphtha, gasoline, kerosine
or a mixture thereof.

4.      A process according to any one of the preceding
claims, wherein the physical solvent is a dialkyl ether of
polyalkylene glycol or a mixture thereof.

5.      A process according to claim 4, wherein the dialkyl
ether of polyalkylene glycol is a mixture of dimethyl ethers
of polyethylene glycols having the general formula
$CH_3O(C_2H_4O)_xCH_3$ wherein x is 3-9 and the molecular homolog
distribution in terms of x is:

DKT H-1889

FIG.1

FIG.2a

FIG. 2b

S77 ──→ SALES GAS

S99 ──→ CO₂

S132

L115

S131

S21

V21

S126

S65

L21

S129

S104

S128

S112

S130

3/3

0129704

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl ³) |
|---|---|---|---|
| A | EP-A-0 062 789 (BASF) * Claim 1 * | 1,4 | C 07 C 7/11 C 07 C 9/04 C 01 B 31/20 B 01 D 53/14 |
| A | GB-A-2 072 525 (SHELL INTERNATIONALE RESEARCH MAATSCHAPPIJ) * Abstract | 1 | |
| A | FR-A-1 546 703 (METALLGESELLSCHAFT) * Claim 1 * | 1,2 | |
| A | EP-A-0 029 324 (HELIX TECHNOLOGY) * Claims 1,3,4,8 * & US-A-4 318 723 (Cat. AD) | 1,3 | |

|  | TECHNICAL FIELDS SEARCHED (Int Cl ³) |
|---|---|
|  | B 01 D 53/14 C 01 B 31/20 C 07 C 7/11 C 07 C 9/04 |

The present search report has been drawn up for all claims

| Place of search BERLIN | Date of completion of the search 14-08-1984 | Examiner KNAACK M |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82